# EUROPÄISCHE PATENTSCHRIFT

(11) **EP 1 761 415 B1**
(45) Veröffentlichungstag und Bekanntmachung des Hinweises auf die Patenterteilung: **03.12.2008**
(21) Anmeldenummer: 05752595.8
(22) Anmeldetag: 15.06.2005
(51) Int. Cl.: B60R 21/02, B60R 21/09, B60T 7/06

(54) **VERFAHREN ZUR DÄMPFUNG AXIALER STÖSSE AUF EINE UNTERE EXTREMITÄT EINES FAHRERS**
METHOD FOR DAMPING AXIAL SHOCKS ONTO A DRIVER'S LOWER EXTREMITY
PROCEDE POUR AMORTIR DES CHOCS AXIAUX SUR UNE EXTREMITE INFERIEURE D'UN CONDUCTEUR

(30) Priorität: 23.06.2004 DE 102004030267
(43) Veröffentlichungstag der Anmeldung: 14.03.2007
(73) Patentinhaber: Bayerische MotorenWerke Aktiengesellschaft, 80809 München (DE)
(72) Erfinder: IRZINGER, Albert, 84164 Moosthenning (DE)
(86) Internationale Anmeldenummer: PCT/EP2005/006411
(87) Internationale Veröffentlichungsnummer: WO 2006/000325

(56) Entgegenhaltungen:
- EP-A- 0 983 912
- DE-A1- 19 634 257
- US-A1- 2003 200 863

## Beschreibung

Die Erfindung bezieht sich auf ein Verfahren zur Dämpfung axialer Stöße, die bei einem Aufprall eines Fahrzeugs auf ein Hindernis auf eine auf einem Fahrpedal befindliche untere Extremität eines Fahrers wirken.

Kommt es zu einem Aufprall eines Fahrzeugs bzw. zu einer Frontalkollision, erfährt der Fahrer normalerweise erhebliche Belastungen der unteren Extremitäten durch die Vorverlagerung des Fahrers und die gleichzeitige Rückverlagerung des Motors. Durch die Vorverlagerung des Fahrers schlagen die Beine mit einer sehr hohen Energie auf den Fußraum auf, wobei die Energie nicht oder kaum abgebremst wird. Es ist bereits bekannt im Fußraum des Fahrers und Beifahrers dämpfende Schaumelemente anzuordnen, um den starken Aufprall der Beine zu verringern. Im Bereich hinter dem Fahrpedal kann diese Maßnahme allerdings nicht umgesetzt werden, da im Fahrbetrieb das Fahrpedal einen festen Anschlag haben sollte.

Aus der DE 196 34 257 A1 und der US 2003/0200863 A1 sind Bremsanlagen bekannt, die durch Drücken des Bremspedals über eine aus mehreren Elementen bestehenden Betätigungsstange eine Bremszylinder betätigen. Zur Vermeidung von Fußverletzungen werden bei einem erkannten Unfall die Elemente ineinander geschoben, so dass die in den Fußraum eintretenden Füße nicht durch das Bremspedal behindert werden.

DE 196 34 257 beschreibt ein verfahren zur Dämpfung axialer Stöße, die bei einem Aufprall eines Fahrzeugs auf ein Hindernis auf eine auf einem Fahrpedal befindliche untere Extremität eines Fahrers wirken, bei dem mittels einer Vorrichtung zum Erzeugen einer einstellbaren Rückstellkraft auf das Fahrpedal auf ein unfallerkennendes Signal eines Steuergeräts hin eine vorgegebene Rückstellkraft auf das Fahrpedal erzeugt wird, die derart entgegen der Fußkraft des Fahrers wirkt, dass die Position des Fahrpedals in der aktuellen Position stehen bleibt oder durch die Energie des Fahrers entgegen der Rückstellkraft bewegt wird.

Eine Alternative Vorrichtung zur Vermeidung von Fußverletzungen aufgrund eines in den Fußraum ragenden Pedals bei einem Unfall ist aus der EP 0 983 912 A1 bekannt. Hier ist die mit einem Pedal verbundenen Pedaldruckstange mit einer Ausknickvorrichtung ausgestattet, die bei einem Unfall durch eine auf die Pedaldruckstange einwirkende Kraft ein seitliches Ausknicken der Pedaldruckstange und dadurch eine Verlagerung des Pedal in Richtung einer Spritzwand des Fahrzeugs bewirkt.

Daher ist es Aufgabe der Erfindung, ein Verfahren zur Dämpfung axialer Stöße anzugeben, die bei einem Aufprall eines Fahrzeugs auf ein Hindernis auf eine auf einem Fahrpedal befindliche untere Extremität eines Fahrers wirken.

Diese Aufgabe wird erfindungsgemäß durch ein Verfahren nach Patentanspruch 1 gelöst. Vorteilhafte Weiterbildungen ergeben sich aus den abhängigen Ansprüchen.

Das erfindungsgemäße Verfahren zur Dämpfung axialer Stöße bzw. Kräfte, die bei einem Aufprall eines Fahrzeugs auf ein Hindernis auf eine auf einem Fahrpedal befindliche untere Extremität eines Fahrers wirken sieht vor, dass auf ein unfallerkennendes Signal eines Steuergeräts hin mittels einer Vorrichtung zum Erzeugen einer einstellbaren Rückstellkraft auf das Fahrpedal, eine vorgegebene Rückstellkraft auf das Fahrpedal erzeugt wird.

Es sind Vorrichtungen für Fahrpedale bekannt, mit denen eine einstellbare Rückstellkraft auf das Fahrpedal erzeugt werden kann. Mittels einer derartigen Vorrichtung kann bspw. dem Fahrer durch eine einstellbare Rückstellkraft die notwendige Stellung des Fahrpedals zum Erreichen einer vorgegebenen Geschwindigkeit angezeigt werden. Gemäß dem erfindungsgemäßen Verfahren wird eine derartige Vorrichtung zum Erzeugung einer vorgegebenen Rückstellkraft auf ein Fahrpedal bei einem Aufprall des Fahrzeugs verwendet. Hat der Fahrer sein Bein bzw. seinen Fuß auf dem Fahrpedal und kommt es bspw. zu einer Frontalkollision des Fahrzeugs mit einem anderen Fahrzeug, wird ein unfallerkennendes Signal in einem Steuergerät ausgelöst. Auf dieses Signal hin wird auf das Fahrpedal eine vorgegebene Rückstellkraft erzeugt, die entgegen der Fuß Kraft des Fahrers wirkt. Die Position des Fahrpedals bleibt dadurch in etwa in der aktuellen Position stehen. Dem auf dem Fahrpedal befindlichem Bein wird aufgrund der Rückstellkraft ein erhöhter Widerstand entgegengesetzt. Die durch den Aufprall erzeugte Energie des Fahrers wird auf das Fahrpedal weitergegeben und in der auf das Fahrpedal wirkenden Rückstellkraft umgesetzt.

Je nach Stärke des Aufpralls bzw. der durch den Aufprall erzeugten Energie des Fahrers kann das Fahrpedal durch die Energie des Fahrers aufgrund einer Kraft-Weg-Energieumwandlung auch entgegen der Rückstellkraft bewegt werden. Die harte Kraftspitze des beim ansonsten üblichen Durchschlagens des Pedalwegs kann somit wesentlich verringert oder sogar unterbunden werden, wenn die gesamte Energie des Fahrers auf das Fahrpedal durch die Rückstellkraft umgesetzt werden kann.

Der Vollständigkeit halber sei noch auf die DE 197 52 231 A1 hinzuweisen, aus der eine Kraftfahrzeugbremsanlage mit einem Bremspedal und einer an dem Bremspedal angelenktem Kraftübersetzungsanordnung bekannt ist. Um zu verhindern, dass der Fuß des Fahrers bei einem Unfall im gefährdeten Fußraum des Fahrzeugs eingeklemmt wird, ist in der Kraftfahrzeugbremsanlage eine Vakuumbremskraftverstärker-Hauptbremszylinderkombination vorgesehen, wobei bei einem Unfall die Verringerung der Verstärkungskraft zu einer Rückstellbewegung des Fahrpedals führt. Dadurch wird der Fuß aktiv aus dem besonders gefährdeten Fußbereich herausgeschoben und die Aufgabe gelöst, das Risiko zu minimieren, dass die Füße des Fahrers im Fußraum eingeklemmt werden.

Vorteilhafterweise ist das unfallerkennende Signal ein airbag-auslösendes Signal oder ein gurtstraffer-auslösendes Signal, was den Vorteil bietet, dass nicht ein separates Signal erzeugt werden muss, sondern ein ohnehin erzeugtes Signal für das erfindungsgemäße Verfahren verwendet werden kann.

Vorteilhafterweise ist zudem die vorgegebene Rückstellkraft eine maximale Rückstellkraft, welche die Vorrichtung zum Erzeugen der Rückstellkraft aufwenden kann. Je höher die Rückstellkraft ist, desto mehr Energie kann umgesetzt werden und desto weiter verringerter sich die Kraftspitze beim Durchschlagen des Fahrpedals.

Es können eine Vielzahl weiterer Details durchaus abweichend von obiger Beschreibung gestaltet sein, ohne den Inhalt der Patentansprüche zu verlassen.

## Patentansprüche

1. Verfahren zur Dämpfung axialer Stöße, die bei einem Aufprall eines Fahrzeugs auf ein Hindernis auf eine auf einem Fahrpedal befindliche untere Extremität eines Fahrers wirken, bei dem mittels einer Vorrichtung zum Erzeugen einer einstellbaren Rückstellkraft auf das Fahrpedal auf ein unfallerkennendes Signal eines Steuergeräts hin eine vorgegebene Rückstellkraft auf das Fahrpedal erzeugt wird, die derart entgegen der Fußkraft des Fahrers wirkt und dem auf dem Fahrpedal befindlichen Bein einen erhöhten Widerstand entgegensetzt, dass die Position des Fahrpedals in der aktuellen Position stehen bleibt oder durch die Energie des Fahrers entgegen der Rückstellkraft bewegt wird.

2. Verfahren nach Patentanspruch 1, **dadurch gekennzeichnet, dass** das unfallerkennende Signal ein airbag-auslösendes Signal ist.

3. Verfahren nach Patentanspruch 1, **dadurch gekennzeichnet, dass** das unfallerkennende Signal ein gurtstraffer-auslösendes Signal ist.

4. Verfahren nach Patentanspruch 1 oder 2, **dadurch gekennzeichnet, dass** die vorgegebene Rückstellkraft eine maximale Rückstellkraft ist.

## Claims

1. A method for damping axial shocks, which affect a driver's lower extremity situated on an accelerator during an impact of a vehicle against an obstacle, wherein a predetermined restoring force is produced on the accelerator by means of a device for producing an adjustable restoring force on the accelerator upon a signal recognising an accident of a control device, which restoring force acts counter to the foot force of the driver and opposes the leg situated on the accelerator with an increased resistance, in that the position of the accelerator remains in the current position or is moved counter to the restoring force by the energy of the driver.

2. A method according to claim 1, **characterised in that** the signal recognising an accident is an airbag-triggering signal.

3. A method according to claim 1, **characterised in that** the signal recognising an accident is a belt tensioner-triggering signal.

4. A method according to claim 1 or 2, **characterised in that** the predetermined restoring force is a maximum restoring force.

## Revendications

1. Procédé pour amortir des chocs axiaux produits en cas de collision d'un véhicule contre un obstacle, sur une extrémité inférieure située au niveau de la pédale d'accélérateur d'un conducteur, selon lequel à l'aide d'un dispositif pour générer une force de rappel réglable, exercée sur la pédale d'accélérateur, un signal de détection de collision fait que l'appareil de commande génère une force de rappel prédéfinie, appliquée à la pédale d'accélérateur, qui agit contre la force exercée par le pied du conducteur et s'oppose à la résistance augmentée, exercée par la jambe appliquée sur la pédale d'accélérateur, de façon que la position de la pédale d'accélérateur reste dans sa position actuelle ou soit déplacée par l'énergie du conducteur contre la force de rappel.

2. Procédé selon la revendication 1,
**caractérisé en ce que**
le signal de détection de collision est un signal de déclenchement d'un coussin gonflable.

3. Procédé selon la revendication 1,
**caractérisé en ce que**
le signal de détection d'une collision est un signal de mise en tension des ceintures.

4. Procédé selon la revendication 1 ou 2,
**caractérisé en ce que**
la force de rappel prédéfinie est une force de rappel maximale.
